# EUROPÄISCHE PATENTSCHRIFT

(11) **EP 2 661 800 B1**
(45) Veröffentlichungstag und Bekanntmachung des Hinweises auf die Patenterteilung: **04.03.2015**
(21) Anmeldenummer: 12728186.3
(22) Anmeldetag: 14.06.2012
(51) Int. Cl.: H02K 3/51

(54) **ROTOR FÜR EINE DYNAMOELEKTRISCHE MASCHINE**
ROTOR FOR A DYNAMO-ELECTRIC MACHINE
ROTOR POUR MACHINE DYNAMOÉLECTRIQUE

(30) Priorität: 14.06.2011 DE 102011106481
(43) Veröffentlichungstag der Anmeldung: 13.11.2013
(73) Patentinhaber: Voith Patent GmbH, 89522 Heidenheim (DE)
(72) Erfinder: EILEBRECHT, Philipp, 89522 Heidenheim (DE); SHIRAKI, Satoshi, 89522 Heidenheim (DE); HENNING, Holger, 89537 Giengen (DE)
(74) Vertreter: Dr. Weitzel & Partner
(86) Internationale Anmeldenummer: PCT/EP2012/002505
(87) Internationale Veröffentlichungsnummer: WO 2012/171641

(56) Entgegenhaltungen:
- DE-A1-102009 016 515
- DE-A1-102009 016 516
- DE-B- 1 046 756

## Beschreibung

Die Erfindung betrifft einen Rotor für eine dynamoelektrische Maschine, beispielsweise einen elektrischen Generator, nach der im Oberbegriff von Anspruch 1 näher definierten Art.

Zur Befestigung der Wickelköpfe von Rotorwicklungen ist es unter anderem üblich, die Wickelköpfe innen durch einen ringartigen Wickelkopfträger abzustützen und die Wickelköpfe auf diesem Wicklungsträger mit Hilfe von Bandagen zu fixieren. Hierzu wird beispielhaft auf die US 3,073,004 A verwiesen. Insbesondere bei größeren Maschinen kann anstelle einer Bandage auch ein mehrfach geteilter Ring verwendet werden, der mit Isolierzwischenlagen an den Wickelköpfen anliegt und mit Hilfe von Schrauben am Wicklungsträger fixiert wird. Bei besonders großen Fliehkräften können auch Kappen über die Wickelköpfe geschoben werden. Derartige Kappen sind insbesondere zur Fixierung der Wickelköpfe des Rotors von Turbogeneratoren üblich (Buch "Leitfaden der Elektrotechnik" - Band 3 - "Konstruktions- und Festigkeitsberechnungen elektrischer Maschinen" Verfasser: Dr. C. von Dobbeler, 1962, B.G. Teubner Verlagsgesellschaft Stuttgart, Seiten 25 bis 29 und 58 bis 62; DE 26 29 574 B2; DE-PS 7 01 612). Es ist weiterhin bekannt, die von der umlaufenden Erregerspule einer Synchronmaschine ausgehenden Fliehkräfte mit Hilfe von an der äußeren Stirnseite der Erregerspule anliegenden Haltebrücken aufzunehmen, die ihrerseits durch am Laufkörper der Maschine befestigte, auf Zug beanspruchte Bolzen gehalten werden. (DE-PS 9 50 659).

Die Aufgabe der Fixierung von Wickelköpfen eines Rotors stellt sich in besonderer Weise bei läufergespeisten Schleifringläufermaschinen, wie sie für drehzahlregelbare Wasserkraft-Motor-Generatoren für Pumpspeicherbetrieb zum Einsatz kommen. Für derartige Generator-Motoren ist u.a. charakteristisch, dass der Rotor einen Durchmesser von 3 bis 8 m aufweisen kann. Zur Fixierung der Wickelköpfe eines solchen Rotors ist es bekannt, am Rotorkörper über Stützböcke Halteringe anzuordnen, in denen die Enden von U-förmigen Zugbolzen fixiert sind. Je ein Zugbolzen übergreift dabei mit seinem U-förmigen Bereich einen Wicklungskopf (Bericht 11 - 104 "Development and achieved commercial operation ... for a pumped storage power plant", der CIGRE-Tagung 1992, 30. August bis 5. September). Eine derartige Wickelkopfbefestigung ist konstruktiv und montagetechnisch sehr aufwändig.

DE 195 19 127 C1 beschreibt eine dynamoelektrische Maschine der genannten Bauart. Dabei umfasst die Sicherungseinrichtung gegen Fliehkräfte Zugstäbe, die mit ihren radial inneren Enden an einem Wickelkopfträger, zum Beispiel aus einem Tragring, und mit ihren radial äußeren Enden an Lagerkörpern angreifen, die radial außen an den Wickelköpfen anliegen.

Aus dem nächstliegenden Stand der Technik in Form der DE 10 2009 016 516 A1 ist es außerdem bekannt, einen Wickelkopf über Zuganker, welche gegebenenfalls auch als Zugfedern ausgebildet sein können, in radialer Richtung abzustützen.

Die Wickelköpfe sind stromdurchflossen. Sie werden daher auf höhere Temperaturen erwärmt und dehnen sich aus. Der Wickelkopfträger hingegen ist nicht stromdurchflossen und bleibt daher kalt. Um hieraus resultierende mechanische Spannungen zu vermeiden, ist es aus der WO 2010/115483 A1, ebenso wie aus der GB 1,112,129 bekannt, die Wickelköpfe auf Tragringen zu befestigen, welche drehfest und in axialer Richtung der Rotationsachse des Rotors verschieblich auf dem Rotor beziehungsweise auf einer den Rotor tragenden Nabe gelagert sind. Der Wickelkopfträger, beispielsweise in Form der beschriebenen Tragringe, ist also in axialer Richtung zumindest zwischen einem oberen und einem unteren Anschlag frei beweglich. Dehnen sich die Wicklungselemente in den Nuten des Rotorkörpers und im Bereich des Wickelkopfs nun durch die Erwärmung aus, dann führt der Wickelkopfträger eine Ausgleichsbewegung in axialer Richtung aus.

Die Problematik liegt nun darin, dass insbesondere bei sehr großen Maschinen, typischerweise in einer Größenordnung von 30 MVA oder größer, die Rotationsachse der dynamoelektrischen Maschine typischerweise in Richtung der Schwerkraft verläuft. Dadurch muss das gesamte Gewicht von den Wicklungselementen getragen und im Falle einer thermischen Ausdehnung der Wicklungselemente von diesen verschoben werden. Da der Wickelkopfträger aufgrund der oben beschriebenen typischen Durchmesser derartiger Maschinen entsprechend schwer ist, sind oft große Gewichtskräfte zu überwinden. Dies kann zu sehr hohen Spannungen im Bereich der Wicklungselemente führen, welche das Material der Wicklungselemente entsprechend stauchen und/oder verformen können. Außerdem kann die Situation auftreten, dass die Wicklungselemente, welche typischerweise im Bereich der Nuten verkeilt ausgeführt sind, das Gewicht des Wickelkopfträgers auf Dauer nicht vollständig tragen können, sodass es im Laufe der Zeit zu einem Absinken der gesamten Wicklung gegenüber dem Rotorkörper in Richtung der Schwerkraft nach unten kommen kann.

Die Aufgabe der hier vorliegenden Erfindung besteht nun darin, dieser Problematik entgegenzuwirken und einen Rotor anzugeben, welcher konstruktiv so ausgeführt ist, dass eine thermische Ausdehnung der Wicklungselemente in axialer Richtung nicht zu einer unnötig hohen mechanischen Belastung der Wicklungselemente führt.

Erfindungsgemäß wird diese Aufgabe durch die im kennzeichnenden Teil von Anspruch 1 genannten Merkmale gelöst. Vorteilhafte Weiterbildungen des erfindungsgemäßen Rotors sowie bevorzugte Verwendungen für diesen ergeben sich aus den restlichen hiervon abhängigen Unteransprüchen beziehungsweise Verwendungsansprüchen.

Der Aufbau des Rotors mit den Wickelköpfen entspricht dabei dem Aufbau, wie er auch im Stand der Technik üblich ist. Dabei ist für jeden der Wickelköpfe ein Wickelkopfträger vorgesehen, welcher radial innerhalb des Wickelkopfes und koaxial zur Rotationsachse angeordnet ist. Jeder der Wickelkopfträger ist drehfest und in Richtung der Rotationsachse verschieblich zumindest mittelbar an dem Rotorkörper befestigt. Erfindungsgemäß ist es nun vorgesehen, dass im Bereich dieser Befestigung Federelemente vorgesehen sind, welche zwischen dem Rotorkörper und/oder einem mit diesem umlaufenden Bauteil und dem Wickelkopfträger in axialer Richtung entgegen der Schwerkraft wirken. Die Federelemente tragen den oder die Teile des Wickelkopfträgers also in axialer Richtung. Damit muss zum Verschieben des Wickelkopfträgers in axialer Richtung nicht mehr dessen gesamte Schwerkraft kompensiert werden, sondern es reicht aus, die Kraft zu kompensieren, die sich aus der Differenz zwischen der Federkraft und der Schwerkraft des Wickelkopfträgers beziehungsweise des betroffenen Teils des Wickelkopfträgers ergibt. Die bei der thermischen Ausdehnung der Wicklungselemente auf den Wickelkopfträger aufzubringenden Kräfte werden dadurch minimiert und eine zu hohe Belastung der Wicklungselemente kann sicher verhindert werden. Die Federelemente stützen den Wickelkopfträger dabei entweder auf dem Rotorkörper selbst oder einem mit diesem umlaufenden Bauteil, beispielsweise der Nabe ab. Es ist auch möglich, die Federelemente so anzuordnen, dass diese sich sowohl auf dem Rotorkörper als auch auf dem mit diesem umlaufenden Bauteil abstützen und den Wickelkopfträger tragen.

Gemäß einer besonders günstigen und vorteilhaften Weiterbildung des erfindungsgemäßen Rotors ist es dabei vorgesehen, dass die Federelemente so ausgewählt sind, dass diese das Gewicht der Wickelkopfträger zu einem großen Teil ausgleichen. Diese Schwerpunktanwendung der erfindungsgemäßen Idee mit den Federelementen dient dazu, den Wickelkopfträger in axialer Richtung vergleichsweise frei bewegen zu können, sodass bei der Ausdehnung der Wicklungselemente eine Bewegung des Wickelkopfträgers einfach möglich wird, ohne dass dessen gesamte Schwerkraft durch die sich ausdehnenden oder zusammenziehenden Wicklungselemente kompensiert werden muss. Die Federelemente gleichen so das Gewicht des Wickelkopfträgers zumindest zu einem großen Teil aus. Unter "einem großen Teil" ist dabei zumindest die Hälfte, vorzugsweise jedoch mehr als zwei Drittel des Gewichts des Wickelkopfträgers zu verstehen. Im Idealfall erfolgt der Ausgleich des Gewichts des Vl/ickelkopfträgers dabei so, dass dessen gesamtes Gewicht ausgeglichen werden kann.

In einer weiteren sehr vorteilhaften Ausgestaltung kann es darüber hinaus vorgesehen sein, dass die Federelemente so ausgewählt sind, dass diese den Wickelkopfträger gegenüber dem Rotorkörper in Richtung der Schwerkraft vorspannen. Bei dieser Ausgestaltung der erfindungsgemäßen Idee mit entsprechend stärkeren Federelementen wird nicht nur die Gewichtskraft des Wickelkopfträgers vollständig kompensiert, sondern die Federelemente werden so ausgewählt, dass sie zusätzlich den Wickelkopfträger gegenüber dem Rotorkörper in Richtung der Schwerkraft vorspannen. Damit lässt sich bei der Montage ein verspannter Zustand der Federn realisieren, sodass diese im regulären Betrieb, nachdem eine gewisse Ausdehnung der Wicklungselemente bereits erfolgt ist, entweder immer noch entsprechend vorgespannt sind, oder vorzugsweise in diesem erwärmten Regulärzustand während des Betriebs des Rotors frei von der Schwerkraft des Wickelkopfträgers sind. Dies erlaubt einen einfachen, effizienten und über einen großen Zeitraum hinweg sehr schonenden Betrieb des Rotors. Wird ein Zustand ausgewählt, bei welchem auch im regulären Betrieb eine leichte Vorspannung des Wickelkopfträgers gegenüber der Schwerkraft realisiert ist, so wird sicher und zuverlässig ein Absinken der Wicklungselemente in Richtung der Schwerkraft über eine sehr lange Betriebsdauer des Rotors hinweg verhindert.

Prinzipiell ist es selbstverständlich denkbar, die Federelemente in annähernd beliebiger Art und Weise auszuwählen. So wären beispielsweise Druckfedern in Form von Tellerfedern oder Spiralfedern ebenso denkbar wie Gasdruckfedern, Elastomerfedern oder beliebige Kombinationen hiervon. Selbstverständlich ist es auch denkbar, über den Umfang des Rotors verteilt, unterschiedliche Federtypen an den verschiedenen Unterstützungspunkten für den Wickelkopfträger einzusetzen.

Da im Bereich des Wickelkopfs eine vergleichsweise hohe thermische Belastung auftritt, haben sich insbesondere Tellerfedern oder Spiralfedern bewährt, da diese typischerweise aus einem metallischen Material hergestellt werden können und über den typischen Bereich der Betriebstemperatur des Rotors hinweg sicher, zuverlässig und ohne allzu große thermische Einflüsse auf die Federkennlinie eine entsprechende Unterstützung des Wickelkopfträgers gewährleisten.

Als Ergänzung oder Alternative können auch sehr gut Elastomerfedern (mit-)eingesetzt werden. Diese sind insbesondere hinsichtlich der Flexibilität der benötigten Eigenschaften in der Herstellung von besonderem Vorteil, da annähernd jede beliebige Federkennlinie durch den Einsatz eines geeigneten Materials oder mehrerer geeigneter Materialien - zum Beispiel in einem Schichtaufbau aus Schichten verschiedener Materialien - und/oder Formgebungen erzielt werden kann.

Der erfindungsgemäße Rotor erlaubt eine sehr gute, zuverlässige und störungsfreie Anwendung in einer dynamoelektrischen Maschine. Er ist insbesondere für entsprechend große Maschinen, typischerweise Maschinen mit mehr als 30 MVA Nennleistung, von besonderem Vorteil. Seine besonders bevorzugte Verwendung liegt dabei im Einsatz in einer Asynchronmaschine mit Schleifringläufer für den Einsatz mit variablen Drehzahlen. Insbesondere für diesen Bautyp und hier insbesondere für eine Ausgestaltung der Asynchronmaschine als doppelgespeiste Asynchronmaschine ist der erfindungsgemäße Rotor besonders gut geeignet, da bei derartigen Maschinen die besondere Verlässlichkeit und der einfache und effektive Aufbau des Rotors von entscheidender Bedeutung ist.

Die Verwendung kann dabei insbesondere in Form eines Maschinensatzes für eine Wasserkraftanlage, mit einer Wasserturbine oder Pumpturbine und einer dynamoelektrischen Maschine, in welchem ein Rotor der beschriebenen Art in Triebverbindung mit der Wasserturbine oder der Pumpturbine steht, liegen. Insbesondere bei einem derartigen Einsatz, bei welchem häufig in Richtung der Schwerkraft verlaufende Rotationsachsen der dynamoelektrischen Maschine realisiert sind, spielt der erfindungsgemäße Aufbau des Wickelkopfs mit dem durch Federelemente unterstützenden Wickelkopfträger eine entscheidende Bedeutung. Bei derartigen Maschinen kommt es häufig zu stark schwankenden Drehzahlen und stark schwankenden Temperaturen im Bereich des Wickelkopfs. Die Ausdehnung der Wicklungselemente gegenüber dem Rotorkörper und damit die axiale Verschiebung des Wickelkopfträgers sind damit während des Betriebs sehr häufig. Je leichter die axiale Bewegung des Wickelkopfträgers daher zu realisieren ist, desto weniger mechanische Beanspruchung erfährt der Gesamtaufbau des Rotors und desto länger kann ein störungsfreier Betrieb des Rotors gewährleistet werden.

In einer besonders bevorzugten Weiterbildung sieht auch der Maschinensatz den Einsatz der dynamoelektrischen Maschine in Form einer Asynchronmaschine, insbesondere einer doppelgespeisten Asynchronmaschine, mit Schleifringläufer für den Einsatz mit variabler Drehzahl vor.

Weitere vorteilhafte Ausgestaltungen des erfindungsgemäßen Rotors sowie seiner Verwendung ergeben sich aus den restlichen abhängigen Ansprüchen und werden anhand des Ausführungsbeispiels deutlich, welches nachfolgend unter Bezugnahme auf die Figuren näher beschrieben wird.

Dabei zeigen:
- Figur 1: eine Prinzipdarstellung eines Maschinensatzes für eine Wasserkraftanlage; und
- Figur 2: einen Ausschnitt aus einem Teil eines Wickelkopfs eines erfindungsgemäßen Rotors.

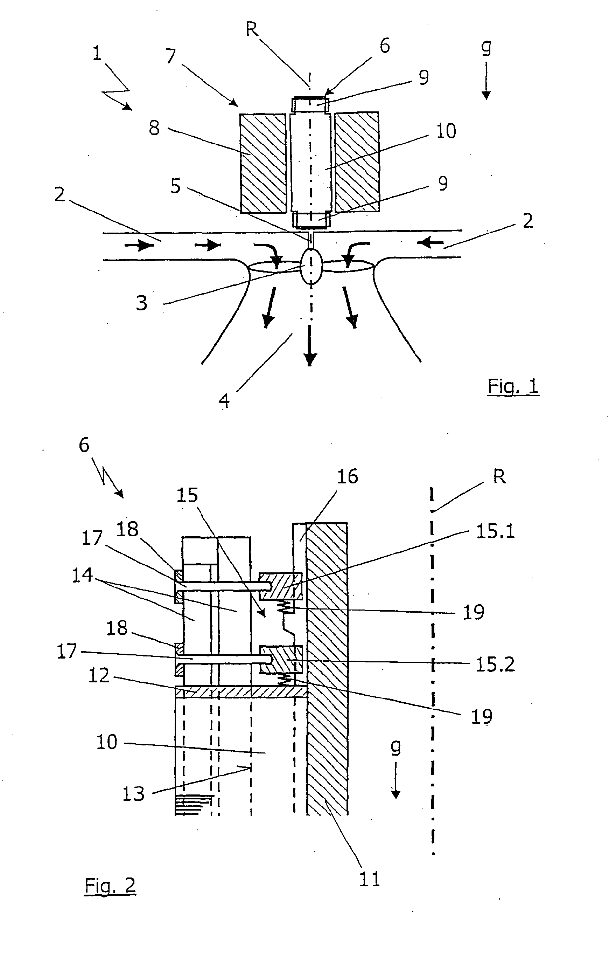

In der Darstellung der Figur 1 ist sehr stark schematisiert eine Wasserkraftanlage 1 zu erkennen. Kern der Wasserkraftanlage 1 ist ein Zuleitungssystem 2, welches Wasser aus dem Bereich eines hier nicht dargestellten Oberwassers zu einer Wasserturbine 3 leitet und durch einen prinzipmäßig angedeuteten Diffusor 4 in den Bereich eines ebenfalls nicht dargestellten Unterwassers abführt. Die Wasserturbine 3 ist dabei über eine Welle 5 mit einem Rotor 6 einer doppelgespeisten Asynchronmaschine 7 mit Schleifringläufer verbunden. Der Rotor 6 wird durch die Wasserturbine 3 angetrieben und rotiert innerhalb eines prinzipmäßig angedeuteten Stators 8 um eine Rotationsachse R, welche, wie bei derartigen Wasserkraftanlagen 1 häufig üblich, in Richtung der Schwerkraft g ausgerichtet ist. Rotor 6 und Stator 7 bilden zusammen die als Generator genutzte Asynchronmaschine mit variabler Drehzahl. Die Asynchronmaschine 7 dient der Erzeugung von elektrischer Energie aus der Energie des Wassers. Ebenso wäre es denkbar, anstelle der Wasserturbine 3 eine Pumpturbine einzusetzen, welche in einem ersten Zustand analog zur Wasserturbine 3 Energie in der als Generator genutzten Asynchronmaschine 7 erzeugt, und welche in einem zweiten Betriebszustand Wasser aus dem Bereich des Unterwassers zurück in den Bereich des Oberwasser pumpen kann. Die Wasserkraftanlage 1 wäre in diesem Fall ein Pumpspeicherkraftwerk, welches zur Speicherung von Energie durch das Pumpen von Wasser auf ein Niveau mit höherer potenzieller Energie geeignet ist.

In an sich bekannter Art und Weise weist der Rotor 6 an seinen beiden axialen Enden prinzipmäßig angedeutet Wickelköpfe 9 auf, auf welche im Rahmen der Figur 2 nun näher eingegangen werden soll.

In der Schnittdarstellung der Figur 2 ist ein Ausschnitt aus einem Teil des Rotors 6 zu erkennen. Dieser rotiert um die mit R bezeichnete Rotationsachse. Der Rotor 6 selbst besteht im Wesentlichen aus einem Rotorkörper 10 sowie einer mit 11 bezeichneten Nabe. Der Rotorkörper 10 ist typischerweise "geblecht" ausgeführt. Dies bedeutet, dass der Rotorkörper 10 in axialer Richtung der Rotationsachse R aus einer Vielzahl von einzelnen Blechen aufgestapelt ist. Dies ist in der Darstellung der Figur 2 im linken unteren Teil des dargestellten Ausschnitts durch einige angedeutete Bleche symbolisiert. Das Blechpaket des Rotorkörpers 10 kann beispielsweise über eine mit 12 bezeichnete Druckplatte in axialer Richtung verpresst sein. Die Nabe 11 kann dabei einstückig mit dem Rotorkörper 10 und damit ebenfalls aus einzelnen Blechen ausgeführt sein, oder sie kann als Zentralelement in anderer Bauart aufgebaut sein und die Bleche des Rotorkörpers 10 entsprechend tragen. Ungeachtet des konkreten Aufbaus ist es immer so, dass die Nabe 11 drehfest mit dem Rotorkörper 10 verbunden ist. Radiale Bewegungen zwischen der Nabe 11 und dem Rotorkörper 10 können möglich sein.

Im Bereich des Rotorkörpers 10 befinden sich in axialer Richtung verlaufende, in radialer Richtung nach außen offene Nuten 13, von denen hier lediglich der Nutgrund mit dem Bezugszeichen 13 versehen ist. In diesen Nuten 13 sind gegeneinander isoliert jeweils zwei Wicklungselemente 14, welche auch als Stäbe 14 bezeichnet werden, eingelegt. Im Bereich des Wickelkopfs 9 verlassen diese Stäbe 14 die Nuten 13 und ragen in axialer Richtung der Rotationsachse R aus dem Rotorkörper 10 heraus. Die einzelnen Stäbe 14 sind dann mit weiteren Stäben 14, welche aus benachbarten Nuten 13 herausragen, entsprechend verbunden, um so die Wicklung des Rotors 6 zu realisieren. Die Wicklungselemente 14 sind im Bereich des Wickelkopfs 9 an einem Wickelkopfträger 15 befestigt. In dem hier dargestellten Ausführungsbeispiel besteht der Wickelkopfträger 15 aus zwei Tragringen 15.1, 15.2, welche über eine im Bereich der Nabe 11 ausgebildete drehfeste Führung 16 mit der Nabe 11 und damit mit dem Rotorkörper 10 zusammenwirken. Die drehfeste Führung lässt Bewegungen in axialer Richtung zu und kann zum Beispiel als eine Art Verzahnung ausgebildet sein. Die beiden Tragringe 15.1, 15.2 des Wickelkopfträgers 15 sind beispielsweise über verschraubte Zuganker 17 und mit diesen verbundenen Plättchen beziehungsweise Klötzchen 18, welche die Zuganker 17 im Bereich des äußeren Wicklungselements 14 abstützen, verbunden. Die Tragringe 15.1, 15.2 sind also mit den Wicklungselementen 14 in radialer Richtung verspannt. Dieser Aufbau ist dabei rein beispielhaft zu verstehen und kann selbstverständlich auch anders ausgeführt werden. Er hat jedoch den entscheidenden Vorteil, dass durch die einzelnen Plättchen 18 in axialer Richtung zwischen den Plättchen 18 am Außenumfang des Wickelkopfs 9 ein Freiraum entsteht, welcher das Durchströmen des Wickelkopfs 9 mit Kühlluft entsprechend erleichtert und damit thermische Effekte aufgrund einer starken Ausdehnung der Wicklungselemente 14 durch eine entsprechende Abkühlung minimieren kann.

Über die hier beispielhaft angedeutete Verzahnung 16 sind die beiden Tragringe 15.1 und 15.2 des Wickelkopfträgers 15 in axialer Richtung verschiebbar. Die Wicklungselemente 14 sind typischerweise aus einem gut leitenden Material, insbesondere aus Kupfer, hergestellt werden und der Rotorkörper 10 ist typischerweise aus Stahlblech gefertigt. Allein dieser Unterschied in den Materialien sorgt bereits für eine unterschiedliche thermische Ausdehnung der Wicklungselemente 14 gegenüber dem Rotorkörper 10. Außerdem werden die Wicklungselemente 14 von Strom durchflossen. Dadurch erwärmen sie sich aufgrund des ohmschen Widerstands stärker, als die sie umgebenden Bereiche der Nuten 13. Bei einem fest verspannten Wickelkopf 9 würde diese thermische Ausdehnung zu massiven Problemen führen, da sie zu einem Verbiegen der Wicklungselemente 14 und/oder einer Zerstörung des Rotors 6 führen könnte. Die in axialer Richtung der Rotationsachse R beweglich ausgebildeten Tragringe 15.1, 15.2 des Wickelkopfträgers 15 verbessern diese Problematik. Allerdings muss man bedenken, dass bei derartigen Maschinen in der eingangs beschriebenen Größe die Tragringe 15.1, 15.2 beziehungsweise der Wickelkopfträger 15 durchaus ein Gewicht in der Größenordnung von mehreren Tonnen aufweisen kann. Dieses Gewicht muss bei einer thermischen Ausdehnung der Wicklungselemente 14 durch die Wicklungselemente getragen und verschoben werden. Dies führt zu einer hohen mechanischen Belastung der Wicklungselemente 14, welche im schlimmsten Fall zu einer Verformung der Wicklungselemente 14 und/oder einem Abknicken derselben führen kann. Der Aufbau des Rotors 6 gemäß der Erfindung wirkt diesem entgegen, indem Federelemente 19 zwischen den beiden Tragringen 15.1 und 15.2 des Wickelkopfträgers 15 und Teilen der Nabe 11 beziehungsweise des Rotorkörpers 10 und/oder der Druckplatte 12 eingesetzt werden. Dies führt dazu, dass das Gewicht des Wickelkopfträgers 15 bereits durch die konstruktive Auswahl dieser Federelemente 19, welche beispielsweise als Tellerfedern, Spiralfedern und/oder elastomere Federelemente ausgebildet sein können, entsprechend berücksichtigt wird. Die Federn 19 können die Gewichtskraft des Wickelkopfträgers 15 kompensieren, sodass dieser von den sich ausdehnenden Wicklungselementen 14 vergleichsweise leicht in axialer Richtung, entgegen der Richtung der Schwerkraft g nach oben verschoben werden kann. Damit wird die mechanische Belastung im Bereich der Wicklungselemente 14 deutlich reduziert, ebenso die Belastung auf eine Befestigung der Wicklungselemente 14 im Bereich der Nuten 13. Dieser Aufbau kann so, wie er in der Darstellung der Figur 2 zu erkennen ist, im Bereich des in Richtung der Schwerkraft g oben liegenden Wickelkopfs 9, wie dargestellt, realisiert werden. Im Bereich des in Richtung der Schwerkraft g unten liegenden Wickelkopfs 15 müssen die Federelemente 19 selbstverständlich so platziert werden, dass diese den Wickelkopfträger 15 ebenfalls entgegen der Schwerkraft g, also ebenfalls nach oben drücken.

Die dargestellte Ausführungsform des Wickelkopfträgers 15 mit zwei Tragringen 15.1, 15.2 ist dabei selbstverständlich beispielhaft zu verstehen. Der Wickelkopfträger 15 könnte auch einteilig oder in Form von noch mehr einzelnen Tragringen oder ähnlichen, unabhängig voneinander ausgebildeten oder miteinander verbundenen Elementen realisiert werden. Jeder einzelne der Tragringe 15.1, 15.2 kann dabei als umlaufender Ring aus einem oder mehreren Segmenten ausgebildet sein. Selbstverständlich ist es auch denkbar, den Tragring in Umfangsrichtung so aufzuteilen, dass zwischen den einzelnen Segmenten des Tragrings in Umfangsrichtung vergleichsweise große Lücken verbleiben.

## Patentansprüche

1. Rotor (6) für eine dynamoelektrische Maschine (7) mit:
einem um eine in Richtung der Schwerkraft (g) verlaufende Rotationsachse (R) rotierenden Rotorkörper (10),
Wicklungselementen (14), welche in axial in dem Rotorkörper (10) verlaufenden Nuten (13) angeordnet sind,
zwei Wickelköpfen (9), welche in axialer Richtung unterhalb und oberhalb des Rotorkörpers (10) angeordnet sind, wobei im Bereich der Wickelköpfe (9) die Wicklungselemente (14) in axialer Richtung aus den Nuten (13) austreten und mit weiteren Wicklungselementen (14) verbunden sind,
einem Wickelkopfträger (15) für jeden der Wickelköpfe (9), welcher radial innerhalb des Wickelkopfs (9) und koaxial zur Rotationsachse (R) angeordnet ist, und welcher drehfest und in Richtung der Rotationsachse (R) verschieblich zumindest mittelbar auf dem Rotorkörper (10) oder einem mit diesem umlaufenden Bauteil befestigt ist,
**dadurch gekennzeichnet, dass**
im Bereich der Befestigung Federelemente (19) vorgesehen sind, welche zwischen dem Rotorkörper (10) und/oder einem mit diesem umlaufenden Bauteil und dem Wickelkopfträger (15) in axialer Richtung entgegen der Schwerkraft (g) wirken,
jeder der Wickelkopfträger (15) wenigstens einen einstückigen oder in Umfangsrichtung segmentierten Tragring (15.1, 15.2) aufweist,
jeder der Tragringe (15.1, 15.2) über Federelemente (19) in axialer Richtung zumindest mittelbar gegenüber dem Rotorkörper (10) gelagert ist.

2. Rotor (6) nach Anspruch 1, **dadurch gekennzeichnet, dass** jeder der Wickelkopfträger (15) wenigstens zwei, vorzugsweise genau zwei, einstückige oder in Umfangsrichtung segmentierte Tragringe (15.1, 15.2) aufweist.

3. Rotor (6) nach einem der Ansprüche 1 bis 2, **dadurch gekennzeichnet, dass** die Federelemente (19) so ausgewählt und angeordnet sind, dass diese das Gewicht des Wickelkopfträgers (15) zumindest zu einem großen Teil ausgleichen.

4. Rotor (6) nach einem der Ansprüche 1 bis 2, **dadurch gekennzeichnet, dass** die Federelemente (19) so ausgewählt und angeordnet sind, dass diese den Wickelkopfträger (15) gegenüber dem Rotorkörper (10) in Richtung der Schwerkraft (g) vorspannen.

5. Rotor (6) nach einem der Ansprüche 1 bis 4, **dadurch gekennzeichnet, dass** die Federelemente (19) als Tellerfedern oder Spiralfedern ausgebildet sind.

6. Rotor (6) nach einem der Ansprüche 1 bis 5, **dadurch gekennzeichnet, dass** die Federelemente (19) als Elastomerfedern ausgebildet sind.

7. Verwendung eines Rotors (6) nach einem der Ansprüche 1 bis 6, in einer Asynchronmaschine (7) mit Schleifringläufer für den Einsatz mit variabler Drehzahl.

8. Verwendung nach Anspruch 7, **dadurch gekennzeichnet, dass** die Asynchronmaschine (7) als doppelgespeiste Asynchronmaschine ausgebildet ist.

9. Maschinensatz für eine Wasserkraftanlage (1) mit einer Wasserturbine (3) oder einer Pumpturbine und einer dynamoelektrischen Maschine (7), mit einem Rotor (6) gemäß einem der Ansprüche 1 bis 6, welcher in Triebverbindung mit der Wasserturbine (3) oder der Pumpturbine steht.

10. Maschinensatz nach Anspruch 9, **dadurch gekennzeichnet, dass** die dynamoelektrische Maschine (7) als Asynchronmaschine, insbesondere als doppelgespeiste Asynchronmaschine, mit Schleifringläufer für den Einsatz mit variabler Drehzahl ausgebildet ist.

## Claims

1. A rotor (6) for a dynamo-electric machine (7), comprising:
a rotor body (10) rotating about a rotational axis (R) extending in the direction of gravity (g);
winding elements (14) which are arranged in grooves (13) extending axially in the rotor body (10);
two winding heads (9) which are arranged in the axial direction beneath and above the rotor body (10), wherein the winding elements (14) protrude from the grooves (13) in the axial direction in the region of the winding heads (9) and are connected to further winding elements (14);
a winding head carrier (15) for each of the winding heads (9), which is arranged radially within the winding head (9) and coaxially to the rotational axis (R), and which is fixed in a torsion-proof manner and
displaceably in the direction of the rotational axis (R) at least indirectly on the rotor body (10) or a component that revolves with said rotor body;
**characterized in that**
spring elements (19) are provided in the region of the fixing, which act in the axial direction against the force of gravity (g) between the rotor body (10) and/or a component that revolves with said rotor body and the winding head carrier (15);
each winding head carrier (15) comprises at least one integral carrier ring (15.1, 15.2) or one that is segmented in the circumferential direction;
each of the carrier rings (15.1, 15.2) is mounted via spring elements (19) in the axial direction at least indirectly in relation to the rotor body (10).

2. A rotor (6) according to claim 1, **characterized in that** each of the winding head carriers (15) comprises at least two, preferably precisely two, integral carrier rings (15.1, 15.2), or such that are segmented in the circumferential direction.

3. A rotor (6) according to one of the claims 1 to 2, **characterized in that** the spring elements (19) are chosen and arranged in such a way that they compensate the weight of the winding head carrier (15) at least to a large part.

4. A rotor (6) according to one of the claims 1 to 2, **characterized in that** the spring elements (19) are chosen and arranged in such a way that they pretension the winding head carrier (15) in relation to the rotor body (10) in the direction of gravity (g).

5. A rotor (6) according to one of the claims 1 to 4, **characterized in that** the spring elements (19) are arranged as disc springs or spiral springs.

6. A rotor (6) according to one of the claims 1 to 5, **characterized in that** the spring elements (19) are arranged as elastomeric springs.

7. The use of a rotor (6) according to one of the claims 1 to 6, in an induction machine (7) with slip-ring rotor for the use with variable speed.

8. The use according to claim 7, **characterized in that** the induction machine (7) is arranged as a double-fed induction machine.

9. A machine unit for a hydro-electric installation (1), comprising a water turbine (3) or a pump turbine and a dynamo-electric machine (7), comprising a rotor (6) according to one of the claims 1 to 6 which is in drive connection with the water turbine (3) or the pump turbine.

10. A machine unit according to claim 9, **characterized in that** the dynamo-electric machine (7) is arranged as an induction machine, especially a double-fed induction machine, comprising slip-ring rotors for the use with variable speed.

## Revendications

1. Rotor (6) pour une machine dynamoélectrique (7) comprenant :
un corps de rotor (10) tournant autour d'un axe de rotation (R) s'étendant dans le sens de la gravité (g),
des éléments d'enroulement (14) disposés dans des rainures (13) s'étendant axialement dans le corps de rotor (10),
deux têtes de bobine (9) disposées dans le sens axial au-dessous et au-dessus du corps de rotor (10), les éléments d'enroulement (14) sortant des rainures (13) dans le sens axial dans la zone des têtes de bobine (9) et étant reliés à d'autres éléments d'enroulement (14), un support de tête de bobine (15) pour chacune des têtes de bobine (9), lequel est disposé radialement à l'intérieur de la tête de bobine (9) et coaxialement par rapport à l'axe de rotation (R), et qui est fixé de manière solidaire en rotation et de manière mobile dans le sens de l'axe de rotation (R) au moins indirectement sur le corps de rotor ou sur un élément tournant avec ce dernier, **caractérisé en ce que** des éléments élastiques (19) agissant dans le sens axial dans le sens inverse de la gravité (g) entre le corps de rotor et/ou un élément tournant avec ce dernier et le support de tête de bobine (15) sont disposés dans la zone de fixation,
chacun des supports de tête de bobine (15) comportant au moins une bague de support (15.1, 15.2) d'une seule pièce ou segmentée dans le sens de la circonférence,
chacune des bagues de support (15.1, 15.2) étant montée dans le sens axial au moins indirectement relativement au corps de rotor (10) par l'intermédiaire d'éléments élastiques.

2. Rotor (6) selon la revendication 1, **caractérisé en ce que** chacun des supports de tête de bobine (15) présente au moins deux, de préférence deux exactement, bagues de support (15.1, 15.2) d'une seule pièce ou segmentée dans le sens de la circonférence.

3. Rotor (6) selon l'une des revendications 1 à 2, **caractérisé en ce que** les éléments élastiques (19) sont sélectionnés et agencés de telle façon que ces derniers compensent le poids du support de tête de bobine (15) au moins dans une grande partie.

4. Rotor (6) selon l'une des revendications 1 à 2, **caractérisé en ce que** les éléments élastiques (19) sont sélectionnés et agencés de telle façon que ces derniers précontraignent le support de tête de bobine (15) par rapport au corps de rotor (10) dans le sens de la force de gravité (g).

5. Rotor (6) selon l'une des revendications 1 à 4, **caractérisé en ce que** les éléments élastiques (19) sont constitués de ressorts à disques ou de ressorts spiralés.

6. Rotor (6) selon l'une des revendications 1 à 5, **caractérisé en ce que** les éléments élastiques (19) sont constitués de ressorts élastomères.

7. Utilisation d'un rotor (6) selon l'une quelconque des revendications 1 à 6, dans un moteur asynchrone (7) avec un rotor à bague de glissement pour une application avec une vitesse de rotation variable.

8. Utilisation selon la revendication 7, **caractérisée en ce que** le moteur électrique (7) prend la forme de moteur asynchrone à alimentation double.

9. Machine équipée pour centrale hydroélectrique (1) comprenant une turbine à eau (3) ou bien une turbine de pompe et une machine dynamoélectrique (7), un rotor (6) selon l'une quelconque des revendications 1 à 6, qui est en liaison motrice avec la turbine à eau (3) ou la turbine de pompe.

10. Machine équipée selon la revendication 9, **caractérisée en ce que** la machine dynamoélectrique (7) est constituée d'un moteur asynchrone, en particulier d'un moteur asynchrone à alimentation double, avec un rotor à bague de glissement pour une application avec vitesse de rotation variable.
